# EUROPÄISCHE PATENTSCHRIFT

(11) **EP 2 059 467 B1**
(45) Veröffentlichungstag und Bekanntmachung des Hinweises auf die Patenterteilung: **13.10.2010**
(21) Anmeldenummer: 08785329.7
(22) Anmeldetag: 01.08.2008
(51) Int. Cl.: B65G 47/26, B65G 47/32, B07C 1/04

(54) **VERFAHREN UND VORRICHTUNG ZUR VEREINZELUNG VON STÜCKGUT**
METHOD AND DEVICE FOR SEPARATING BULK MATERIAL
PROCÉDÉ ET DISPOSITIF POUR SÉPARER DES ARTICLES

(30) Priorität: 16.08.2007 DE 102007038834
(43) Veröffentlichungstag der Anmeldung: 20.05.2009
(73) Patentinhaber: Deutsche Post AG, 53113 Bonn (DE)
(72) Erfinder: ECHELMEYER, Wolfgang, 27711 Osterholz-Scharmbeck (DE); FRANCK, Hermann, 27721 Ritterhude (DE)
(74) Vertreter: Jostarndt, Hans-Dieter
(86) Internationale Anmeldenummer: PCT/EP2008/006400
(87) Internationale Veröffentlichungsnummer: WO 2009/021650

(56) Entgegenhaltungen:
- WO-A-2006/002156

## Beschreibung

Die Erfindung betrifft ein Verfahren zur Vereinzelung von Stückgut auf einer Förderstrecke, auf der das Stückgut kontinuierlich transportiert wird.

Die Erfindung betrifft ferner eine Vorrichtung zur Durchführung des Verfahrens.

Beim Transport von Stückgut auf Förderstrecken ist es oftmals erforderlich, diese für eine nachfolgende Bearbeitung zu vereinzeln. Dies ist insbesondere bei Postpaketen der Fall, die an einem Paketzentrum angeliefert und in diesem gemäß ihrer Zieladresse sortiert werden. Für eine Erfassung von einzelnen Sendungsdaten und eine stückweise Bearbeitung der Postpakete ist üblicherweise eine vorherige Vereinzelung erforderlich. Für diese Vereinzelung sind aus dem Stand der Technik eine Vielzahl von Verfahren und Vorrichtungen bekannt. Neben der zufallsbedingten Vereinzelung durch mechanische Mittel wie Pusher an den Seiten einer Förderstrecke oder die Veränderung der Geschwindigkeit von Teilen einer Förderstrecke werden oftmals sensorische Mittel eingesetzt, um die Lage des Stückguts auf der Förderstrecker erfassen und die Vereinzelung entsprechend dieser Signale gezielt ansteuern zu können.

Beispielsweise offenbart die europäische Patentschrift EP 0 818 406 B1 ein System zur Abstandsregelung vorrückender Gegenstände auf einem Transportmittel, bei dem einzelne Abschnitte des Transportmittels individuell angesteuert werden können. Mehrere optische Sensoren erfassen die Lage und die Dimensionen der Gegenstände und in Abhängigkeit von diesen Informationen werden die Geschwindigkeiten der Transportmittel gezielt angesteuert, um einen definierten Abstand zwischen den Gegenständen zu erzeugen.

Die US-Patentschrift US 6,662,929 B1 offenbart ebenfalls eine Vorrichtung zum Vereinzeln von Paketen, die über verschiedene Transportbänder geleitet werden. Photosensoren tasten die Oberfläche der Bänder ab, um Pakete zu detektieren und die einzelnen Transportbänder werden entsprechend der Signale der Photosensoren angesteuert.

Die deutsche Patentschrift DE 101 04 878 C2 offenbart ferner eine Vereinzelungsvorrichtung mit Einrichtungen, die Stückgut von einer Förderstrecke abheben und wieder absenken, um einen definierten Abstand zwischen den Gegenständen einzustellen.

Um auch übereinander liegende Stückgüter erfassen und vereinzeln zu können, ist es aus der US-Patentanmeldung US 2004/0026300 A1 bekannt, die Abmessungen und Charakteristika der Güter beim Transport kontinuierlich durch Photozellen zu erfassen. An einem Transportband befinden sich aktive oder passive Vereinzelungseinrichtungen wie Schranken oder Stege. Liegen mehrere Stückgüter übereinander, ändern sich ihre Charakteristika, wenn sie im Laufe des Transports vereinzelt wurden, so dass sie von den Photozellen als vereinzelt erkannt werden.

Die internationale Patentanmeldung W02006002156 offenbart eine Artikelsortiereinheit, welche ein erstes Förderband zum Fördern von Artikeln in einem ersten Strom mit einer ersten Geschwindigkeit, ein zweites Förderband mit einer Mehrzahl von seitlichen Schiebern, und ein drittes Förderband umfasst. Das erste Förderband transportiert die Artikel des ersten Stroms auf das zweite Förderband, wobei die seitlichen Schieber die Artikel gezielt von dem zweiten Förderband auf das dritte Förderband ablenken. Ein Steuerelement steuert die Fördergeschwindigkeit des dritten Förderbandes und betätigt selektiv die seitlichen Schieber, um einen ausgewählten Artikel von dem ersten oder zweiten Strom auf das dritte Förderband zu verschieben. Die auf dem dritten Förderband geförderten Artikel werden mit einer Beförderungsgeschwindigkeit, welche größer ist als die Geschwindigkeit der vorhergehenden Förderbänder, aufgenommen, wodurch die Artikel vereinzelt werden.

Ausgehend vom Stand der Technik ist es die Aufgabe der Erfindung, ein verbessertes Verfahren zur Vereinzelung von Stückgütern bereitzustellen, das insbesondere die Vereinzelung von übereinander liegenden Stückgütern ermöglicht.

Aufgabe der Erfindung ist es ferner, eine geeignete Vorrichtung zur Durchführung des Verfahrens bereitzustellen.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-7. Die Aufgabe wird ferner durch eine Vorrichtung nach Anspruch 8 gelöst. Vorteilhafte Ausführungsformen der Vorrichtung ergeben sich aus den Unteransprüchen 9-15.

Das erfindungsgemäße Verfahren zur Vereinzelung von Stückgut auf einer Förderstrecke sieht vor, dass das Stückgut kontinuierlich transportiert wird. Erfindungsgemäß werden aus dem Strom an Stückgütern einzelne Stückgüter von wenigstens einem Roboter gegriffen, von der Förderstrecke angehoben und auf wenigstens einer Nebenförderstrecke abgesetzt. Dabei fördert die Nebenförderstrecke in die gleiche Richtung wie die Förderstrecke. Die Nebenförderstrecke führt die aufgenommenen Stückgüter stückweise auf die Förderstrecke zurück, wobei die Rückführung an einem Rückführort erfolgt, der in Förderrichtung unterhalb des Entnahmeortes liegt.

In einem Ausführungsbeispiel der Erfindung erfasst eine erste optische Sensorik im Bereich des Entnahmeortes die Stückgüter beim kontinuierlichen Transport auf der Förderstrecke und die erfassten Daten werden einer Datenverarbeitungseinheit zugeführt, welche die Daten auswertet und den Roboter so ansteuert, dass er einzelne Stückgüter von der Förderstrecke entnimmt.

Vorzugsweise ist im Bereich des Rückführortes eine zweite optische Sensorik vorgesehen, die Stückgüter beim kontinuierlichen Transport auf der Förderstrecke erfasst und die erfassten Daten einer Datenverarbeitungseinheit zuführt, welche die Daten auswertet und die Mittel zur stückweisen Rückführung der Stückgüter auf die Förderstrecke so ansteuert, dass Stückgüter am Rückführort in freie Bereiche auf der Förderstrecke eingebracht werden.

In einem besonders bevorzugten Ausführungsbeispiel der Erfindung setzen zwei Roboter Stückgut auf zwei Nebenförderstrecken um. Die Geschwindigkeit der Förderstrecke kann während des Verfahrens verändert werden.

Von der Erfindung umfasst ist ferner eine Vorrichtung zur Vereinzelung von Stückgut, umfassend eine Förderstrecke für den kontinuierlichen Transport des Stückguts. Die Vorrichtung umfasst wenigstens eine Nebenförderstrecke, welche in die gleiche Richtung fördert wie die Förderstrecke. Die Vorrichtung umfasst ferner wenigstens einen Roboter mit Mitteln zum Greifen von einzelnen Stückgütern aus dem Strom an Stückgütern auf der Förderstrecke, zum Anheben der einzelnen Stückgüter und zum Absetzen der aufgenommenen Stückgüter auf einer Nebenförderstrecke. Die Nebenförderstrecke weist Mittel zur stückweisen Rückführung der aufgenommenen Stückgüter auf die Förderstrecke auf, wobei der Rückführort in Förderrichtung unterhalb des Entnahmeortes liegt.

In einem Ausführungsbeispiel der Erfindung umfasst die Vorrichtung im Bereich des Entnahmeortes eine erste optische Sensorik zur Erfassung der Stückgüter beim kontinuierlichen Transport auf der Förderstrecke, wobei diese erste optische Sensorik in Verbindung mit einer Datenverarbeitungseinheit steht, welche Mittel zur Auswertung der erfassten Daten und Mittel zur Ansteuerung des Roboters umfasst, um einzelne Stückgüter von der Förderstrecke zu entnehmen.

Ergänzend kann die Vorrichtung im Bereich des Rückführortes eine zweite optische Sensorik zur Erfassung der Stückgüter beim kontinuierlichen Transport auf der Förderstrecke umfassen, wobei die zweite optische Sensorik ebenfalls in Verbindung mit der Datenverarbeitungseinheit steht, welche Mittel zur Auswertung der erfassten Daten und Mittel zur Ansteuerung der Mittel zur stückweisen Rückführung der Stückgüter auf die Förderstrecke umfasst, um Stückgüter am Rückführort stückweise in freie Bereiche auf der Förderstrecke einzubringen.

Die optischen Sensoriken können beispielsweise einen 3D-Laserscanner und/oder Lichtschranken aufweisen. Bei den Mitteln zur stückweisen Rückführung der Stückgüter von einer Nebenförderstrecke auf die Förderstrecke kann es sich beispielsweise um bewegliche Schieber handeln.

In einem bevorzugten Ausführungsbeispiel der Erfindung umfasst die Vorrichtung zwei Roboter und zwei Nebenförderstrecken. Vorzugsweise sind die zwei Nebenförderstrecken jeweils auf einer Seite der Förderstrecke abgeordnet und verlaufen parallel zur Förderstrecke. Der Roboter kann ein Knickarmroboter sein. Die Erfindung bringt den Vorteil mit sich, dass ein inhomogener Strom aus Stückgut auf einer Förderstrecke vereinzelt werden kann, ohne dass dies einen großen Raumbedarf erfordert. Werden zwei Nebenstrecken eingesetzt, können diese beispielsweise raumsparend direkt neben der Hauptförderstrecke angeordnet werden. Werden Roboter in Portalbauweise eingesetzt, können auch diese raumsparend oberhalb der Förderstrecken positioniert werden. Die Hauptförderstrecke selbst muss nicht angepasst werden, so dass das erfindungsgemäße Verfahren auch bei bestehenden Förderstrecken eingesetzt werden kann. Die Geschwindigkeit der Förderstrecke muss lediglich von einer Datenverarbeitungseinheit ansteuerbar sein.

Die Erfindung nutzt bekannte optische Sensoriken dazu, um Stückgut gezielt aus einem inhomogenen Stückgutstrom entnehmen zu können. Dabei kann Stückgut so entnommen werden, dass auf der Förderstrecke verbleibende Gegenstände in einem ausreichenden Abstand zueinander liegen.

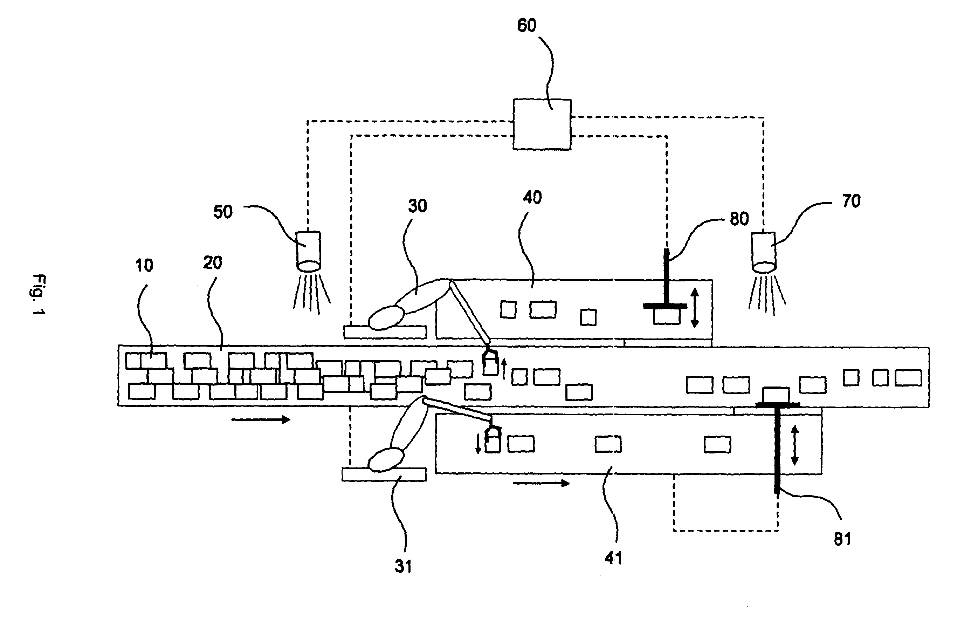

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig. 1.

Fig. 1 zeigt ein Ausführungsbeispiel der erfindungsgemäßen Vorrichtung zur Vereinzelung von Stückgut auf einer Förderstrecke. Das Stückgut 10 wird dabei kontinuierlich auf einer Förderstrecke 20 transportiert. Das Stückgut wurde beispielsweise auf das Förderband gekippt oder ist in zusammen hängenden Mengen auf das Transportband gerutscht. Dabei kann es teilweise bereits vereinzelt vorliegen, während es in anderen Bereichen eng beieinander liegt. Insbesondere können Stückgüter übereinander liegen. Es handelt sich somit um eine inhomogene Ansammlung von Stückgut, die nur schwer nach vordefinierten Schemata vereinzelt werden kann.

Erfindungsgemäß ist an der Förderstrecke 20 wenigstens ein Roboter 30 vorgesehen, welcher Mittel zum Aufnehmen von einzelnen Stückgütern von der Förderstrecke umfasst. Aufgenommenes Stückgut wird von dem Roboter auf einer Nebenförderstrecke 40 abgesetzt. Diese Nebenförderstrecke fördert in die gleiche Richtung wie die Hauptförderstrecke 20 und verläuft vorzugsweise parallel zu dieser. In dem in Fig. 1 dargestellten Ausführungsbeispiel werden zwei Roboter 30 und 31 und zwei Nebenförderstrecken 40 und 41 eingesetzt. Jeder Nebenförderstrecke ist vorzugsweise ein Roboter zugeordnet, der Stückgut von der Förderstrecke 20 auf die jeweilige Nebenförderstrecke umsetzt.

Ein Roboter kann in aus dem Stand der Technik bekannter Weise ausgebildet sein. Vorzugsweise kommen Knickarmroboter zum Einsatz, welche in allen Achsen bewegbar sind. Die Knickarmroboter können auf Podesten angebracht sein, oder es handelt sich um Roboter in Portalbauweise. Ein Portal würde sich dabei beispielsweise quer über die Förderstrecke und die Nebenförderstrecken erstrecken.

Jeder Roboter weist Greifmittel zum Aufnehmen und Absetzen von Stückgut auf. Die Greifmittel können beispielsweise herkömmliche Zangengreifer oder Sauggreifer umfassen. Der Einsatz von Sauggreifern hat sich für die Erfindung als vorteilhaft erwiesen, da damit auch eng nebeneinander liegende Gegenstände von oben aufgenommen werden können.

Im Bereich des Entnahmeortes befindet sich eine erste optische Sensorik 50, welche den Strom an Stückgut auf dem Förderband optisch erfasst. Um Stückgut einzeln aus dem Strom herausgreifen zu können, hat sich als optische Sensorik ein 3D-Scanner mit einer angeschlossenen Bildverarbeitung als vorteilhaft erwiesen. Die Bildverarbeitung ermöglicht es, die Lage und die Abmessungen von erfassten Objekten zu bestimmen. Die Daten werden einer angeschlossenen Datenverarbeitungseinheit 60 zugeführt bzw. diese Datenverarbeitungseinheit 60 führt die Bildverarbeitung aufgrund der Bildsignale der ersten optischen Sensorik 50 durch.

Die Datenverarbeitungseinheit 60 analysiert auf diese Weise den Strom an Stückgütern und legt Objekte fest, die aus dem Strom entnommen werden sollen, um einen Abstand zwischen den auf der Förderstrecke verbleibenden Gegenständen herzustellen. Der jeweilige Roboter wird von der Datenverarbeitungseinheit 60 entsprechend angesteuert und der Roboter greift ein Stückgut von der Förderstrecke ab. Dabei koordiniert die Datenverarbeitungseinheit die Bewegungen der beiden Roboter 30 und 31, so dass diese nicht kollidieren.

Bei diesem Entnahmevorgang kann es ferner erforderlich sein, die Geschwindigkeit der Förderstrecke 20 zu reduzieren, um Gegenstände gezielt aus einer Ansammlung von Stückgütern entnehmen zu können. Beispielsweise kann für die Auflösung eines Stapels an Stückgütern auch der vorübergehende Stillstand der Förderstrecke erforderlich sein, um Gegenstände aufnehmen zu können, so lange sie sich im Einzugsbereich der Roboter 30 und 31 befinden, ist die Ansammlung von Gegenständen aufgelöst, kann die Geschwindigkeit des Bandes wieder erhöht werden. Erkennt die Sensorik 50, dass Gegenstände bereits vereinzelt bei den Robotern ankommen, kann die Geschwindigkeit des Förderbandes kurzzeitig erhöht werden, um den gesamten Transportprozess zu beschleunigen. Die Datenverarbeitungseinheit steuert somit vorzugsweise die Bewegung der Roboter 30 und 31 und die Geschwindigkeit aller Förderstrecken und stimmt diese aufeinander ab.

Die Roboter setzen die aufgenommenen Stückgüter auf den Nebenförderstrecken 40 und 41 ab. Dies erfolgt vorzugsweise so, dass das Stückgut nun vereinzelt auf den Nebenförderstrecken vorliegt. Die Nebenförderstrecken transportieren die vereinzelten Gegenstände bis zu einem Rückführort, an dem die Stückgüter stückweise wieder zurück auf die Förderstrecke 20 geführt werden. Der Rückführort liegt, in Förderrichtung der Förderstrecke 20 gesehen, unterhalb des Entnahmeortes. Die Rückführung kann beispielsweise über bewegliche Schieber 80 und 81 erfolgen, mit denen das Stückgut auf die Förderstrecke 20 geschoben bzw. gestoßen werden kann. Diese Pusher stehen ebenfalls in Verbindung mit der Datenverarbeitungseinheit 60, welche die Schieber ansteuert. In einem alternativen Ausführungsbeispiel der Erfindung kann eine Nebenförderstrecke am Rückführort nach unten geneigt sein, so dass Stückgut auf die Hauptförderstrecke 20 fällt bzw. rutscht, wenn es von einem beweglichen Sperrmittel freigegeben wird. In diesem Fall wird das Sperrmittel ebenfalls von der Datenverarbeitungseinheit 60 angesteuert.

Die Rückführung von Stückgut von den Nebenförderstrecken auf die Förderstrecke erfolgt vorzugsweise in Abhängigkeit von dem Stückgutstrom auf der Förderstrecke 20. Um diesen zu bestimmen, kann am Rückführort eine zweite optische Sensorik 70 vorgesehen sein, welche den Strom an Stückgut am Rückführort detektiert. Diese Sensorik 70 kann ebenfalls durch einen 3D-Scanner mit einer Bildverarbeitungseinheit gebildet werden. Es können jedoch auch seitliche Lichtschranken eingesetzt werden, welche ausreichen, um die Abstände zwischen dem verbleibenden Stückgut zu bestimmen.

Vorzugsweise wurde der Stückgutstrom auf der Förderstrecke 20 von den Robotern soweit aufgelöst, dass das Stückgut vereinzelt im Rückführbereich ankommt. Die Datenverarbeitungseinheit 60 ermittelt aufgrund der Signale der zweiten Sensorik 70 geeignete Lücken für zusätzliche Gegenstände und aktiviert die Schieber 80 und 81 entsprechend dieser Auswertung. Die Stückgüter der Nebenförderstrecken werden so auf die Hauptförderstrecke 20 zurückgeführt, wodurch sich ein vereinzelter Strom an Gegenständen ergibt, der einer nachfolgenden Bearbeitung zugeführt werden kann.

### Bezugszeichenliste:

- 10: Stückgut, Paket, Gegenstand
- 20: Förderstrecke, Hauptförderstrecke
- 30,31: Roboter
- 40,41: Nebenförderstrecke
- 50: Optische Sensorik, Entnahmeort
- 60: Datenverarbeitungseinheit
- 70: Optische Sensorik, Rückführort
- 80,81: Schieber, Pusher

## Patentansprüche

1. Verfahren zur Vereinzelung von Stückgut (10) auf einer Förderstrecke (20), auf welcher das Stückgut (10) kontinuierlich transportiert wird, wobei wenigstens eine Nebenförderstrecke (40;41) vorgesehen ist, die in die gleiche Richtung fördert wie die Förderstrecke (20),
**dadurch gekennzeichnet,**
**dass** aus dem Strom an Stückgütern (10) einzelne Stückgüter (10) von wenigstens einem Roboter (30;31) gegriffen und von der Förderstrecke (20) angehoben und auf der wenigstens einen Nebenförderstrecke (40;41) abgesetzt werden, und dass die Nebenförderstrecke (40;41) die aufgenommenen Stückgüter (10) stückweise auf die Förderstrecke (20) rückführt, wobei die Rückführung an einem Rückführort erfolgt, der in Förderrichtung unterhalb des Entnahmeortes liegt.

2. Verfahren nach Anspruch 1,
**dadurch gekennzeichnet,**
**dass** eine erste optische Sensorik (50) im Bereich des Entnahmeortes die Stückgüter (10) beim kontinuierlichen Transport auf der Förderstrecke (20) erfasst und die erfassten Daten einer Datenverarbeitungseinheit (60) zuführt, welche die Daten auswertet und den Roboter (30;31) so ansteuert, dass er einzelne Stückgüter (10) von der Förderstrecke (20) entnimmt.

3. Verfahren nach einem der Ansprüche 1 bis 2,
**dadurch gekennzeichnet,**
**dass** eine zweite optische Sensorik (70) im Bereich des Rückführortes die Stückgüter (10) beim kontinuierlichen Transport auf der Förderstrecke (20) erfasst und die erfassten Daten einer Datenverarbeitungseinheit (60) zuführt, welche die Daten auswertet und die Mittel zur stückweisen Rückführung der Stückgüter (10) auf die Förderstrecke (20) so ansteuert, dass Stückgüter (10) am Rückführort in freie Bereiche auf der Förderstrecke (20) eingebracht werden.

4. Verfahren nach einem der Ansprüche 1 bis 3,
**dadurch gekennzeichnet,**
**dass** die Datenerfassung der optischen Sensorik (50;70) mit einem 3D-Laserscanner und/oder Lichtschranken erfolgt.

5. Verfahren nach einem der Ansprüche 1 bis 4,
**dadurch gekennzeichnet,**
**dass** die stückweise Rückführung der Stückgüter (10) von einer Nebenfördertrecke (40;41) auf die Förderstrecke (20) durch bewegliche Schieber (80;81) erfolgt.

6. Verfahren nach einem der Ansprüche 1 bis 5,
**dadurch gekennzeichnet,**
**dass** zwei Roboter (30;31) Stückgut (10) auf zwei Nebenförderstrecken (40;41) umsetzen.

7. Verfahren nach einem der Ansprüche 1 bis 6,
**dadurch gekennzeichnet,**
**dass** die Geschwindigkeit der Förderstrecke (20) während des Verfahrens verändert wird.

8. Vorrichtung zur Vereinzelung von Stückgut (10), umfassend eine Förderstrecke (20) für den kontinuierlichen Transport des Stückguts (10) und wenigstens eine Nebenförderstrecke (40;41), welche in die gleiche Richtung fördert wie die Förderstrecke (20),
**dadurch gekennzeichnet,**
**dass** die Vorrichtung wenigstens einen Roboter (30;31) mit Mitteln zum Greifen von einzelnen Stückgütern (10) aus dem Strom an Stückgütern auf der Förderstrecke (20), zum Anheben der einzelnen Stückgüter und zum Absetzen der aufgenommenen Stückgüter (10) auf der wenigstens einen
Nebenförderstrecke (40;41) aufweist, und dass die Nebenförderstrecke (40;41) Mittel zur stückweisen Rückführung der aufgenommenen Stückgüter (10) auf die Förderstrecke (20) umfasst, wobei der Rückführort in Förderrichtung unterhalb des Entnahmeortes liegt.

9. Vorrichtung nach Anspruch 8,
**dadurch gekennzeichnet,**
**dass** die Vorrichtung im Bereich des Entnahmeortes eine erste optische Sensorik (50) zur Erfassung der Stückgüter (10) beim kontinuierlichen Transport auf der Förderstrecke (20) umfasst, wobei die erste optische Sensorik (50) in Verbindung mit einer Datenverarbeitungseinheit (60) steht, welche Mittel zur Auswertung der erfassten Daten und Mittel zur Ansteuerung des Roboters (30;31) umfasst, um einzelne Stückgüter (10) von der Förderstrecke (20) zu entnehmen.

10. Vorrichtung nach einem der Ansprüche 8 und 9,
**dadurch gekennzeichnet,**
**dass** die Vorrichtung im Bereich des Rückführortes eine zweite optische Sensorik (70) zur Erfassung der Stückgüter (10) beim kontinuierlichen Transport auf der Förderstrecke (20) umfasst, wobei die zweite optische Sensorik in Verbindung mit einer Datenverarbeitungseinheit (60) steht, welche Mittel zur Auswertung der erfassten Daten und Mittel zur Ansteuerung der Mittel zur stückweisen Rückführung der Stückgüter (10) auf die Förderstrecke (20) umfasst, um Stückgüter (10) am Rückführort stückweise in freie Bereiche auf der Förderstrecke (20) einzubringen.

11. Vorrichtung nach einem der Ansprüche 9 und 10,
**dadurch gekennzeichnet,**
**dass** die optische Sensorik (50;70) einen 3D-Laserscanner und/oder Lichtschranken aufweist.

12. Vorrichtung nach einem der Ansprüche 8 bis 11,
**dadurch gekennzeichnet,**
**dass** die Mittel zur stückweisen Rückführung der Stückgüter (10) von einer Nebenförderstrecke (40;41) auf die Förderstrecke (20) bewegliche Schieber (80;81) aufweisen.

13. Vorrichtung nach einem der Ansprüche 8 bis 12,
**dadurch gekennzeichnet,**
**dass** die Vorrichtung zwei Roboter (30;31) und zwei Nebenförderstrecken (40;41) umfasst.

14. Vorrichtung nach Anspruch 13,
**dadurch gekennzeichnet,**
**dass** die zwei Nebenförderstrecken (40;41) jeweils auf einer Seite der Förderstrecke (20) abgeordnet sind und parallel zur Förderstrecke (20) verlaufen.

15. Vorrichtung nach einem der Ansprüche 8 bis 14,
**dadurch gekennzeichnet,**
**dass** der Roboter (30;31) ein Knickarmroboter ist.

## Claims

1. A method for segregating parcels (10) on a conveyor line (20) on which the parcels (10) are continuously transported, whereby at least one secondary conveyor line (40; 41) is provided that conveys in the same direction as the conveyor line (20), **characterized in that**
individual parcels (10) are gripped from the stream of parcels (10) by at least one robot (30; 31) and lifted from the conveyor line (20) and placed onto the at least one secondary conveyor line (40; 41), and **in that** the secondary conveyor line (40; 41) returns the picked-up parcels (10) to the conveyor line (20) one at a time, whereby they are returned at a return site that is located downstream from the removal site.

2. The method according to Claim 1,
**characterized in that**
a first optical sensor unit (50) in the vicinity of the removal site detects the parcels (10) during the continuous transportation on the conveyor line (20), and it sends the acquired data to a data processing unit (60) that evaluates the data and actuates the robot (30; 31) in such a way that it removes individual parcels (10) from the conveyor line (20).

3. The method according to one of Claims 1 or 2,
**characterized in that**
a second optical sensor unit (70) in the vicinity of the return site detects the parcels (10) during the continuous transportation on the conveyor line (20) and it sends the acquired data to a data processing unit (60) that evaluates the data and actuates the means for returning the parcels (10) to the conveyor line (20) one at a time in such a way that the parcels (10) are placed into free spaces on the conveyor line (20) at the return site.

4. The method according to one of Claims 1 to 3,
**characterized in that**
the data is acquired by the optical sensor unit (50; 70) equipped with a 3D-laser scanner and/or with light barriers.

5. The method according to one of Claims 1 to 4,
**characterized in that**
the return of the parcels (10) one at a time from a secondary conveyor line (40; 41) to the conveyor line (20) is done by means of a movable slide (80; 81).

6. The method according to one of Claims 1 to 5,
**characterized in that**
two robots (30; 31) transfer parcels (10) onto two secondary conveyor lines (40; 41).

7. The method according to one of Claims 1 to 6,
**characterized in that**
the speed of the conveyor line (20) is varied during the execution of the method.

8. A device for segregating parcels (10), comprising a conveyor line (20) for the continuous transportation of the parcels (10) and at least one secondary conveyor line (40; 41) that conveys in the same direction as the conveyor line (20),
**characterized in that**
the device has at least one robot (30; 31) with means for gripping individual parcels (10) from the stream of parcels on the conveyor line (20), for lifting the individual parcels and for placing the picked-up parcels (10) onto the at least one secondary conveyor line (40; 41), and **in that** the secondary conveyor line (40; 41) has means for returning the picked-up parcels (10) to the conveyor line (20) one at a time, whereby the return site is located downstream from the removal site.

9. The device according to Claim 8,
**characterized in that**,
in the vicinity of the removal site, the device has a first optical sensor unit (50) for detecting the parcels (10) during the continuous transportation on the conveyor line (20), whereby the first optical sensor unit (50) is in communication with a data processing unit (60) that comprises means for evaluating the acquired data and means for actuating the robot (30; 31) in order to remove individual parcels (10) from the conveyor line (20).

10. The device according to one of Claims 8 and 9,
**characterized in that**,
in the vicinity of the return site, the device has a second optical sensor unit (70) for detecting the parcels (10) during the continuous transportation on the conveyor line (20), whereby the second optical sensor unit is in communication with a data processing unit (60) that comprises means for evaluating the acquired data and means for actuating the means for returning the parcels (10) to the conveyor line (20) one at a time in order to place the parcels (10) into free spaces on the conveyor line (20) at the return site.

11. The device according to one of Claims 9 and 10,
**characterized in that**
the optical sensor unit (50; 70) has a 3D-laser scanner and/or light barriers.

12. The device according to one of Claims 8 to 11,
**characterized in that**
the means for returning the parcels (10) one at a time from a secondary conveyor line (40; 41) to the conveyor line (20) has movable slides (80; 81).

13. The device according to one of Claims 8 to 12,
**characterized in that**
the device comprises two robots (30; 31) and two secondary conveyor lines (40; 41).

14. The device according to Claim 13,
**characterized in that**
the two secondary conveyor lines (40; 41) are each arranged on one side of the conveyor line (20) and they run parallel to the conveyor line (20).

15. The device according to one of Claims 8 to 14,
**characterized in that**
the robot (30; 31) is an articulated-arm robot.

## Revendications

1. Procédé pour séparer des marchandises de détail (10) sur un trajet de transport (20) sur lequel les marchandises de détail (10) sont transportées en continu, au moins un trajet de transport secondaire (40 ; 41) étant prévu, lequel assure un transport dans la même direction que le trajet de transport (20),
**caractérisé en ce que**
des marchandises de détail individuelles (10) sont prises par au moins un robot (30 ; 31) hors du flux de marchandises de détail (10), sont soulevées du trajet de transport (20) et sont déposées sur l'au moins un trajet de transport secondaire (40 ; 41) et **en ce que** le trajet de transport secondaire (40 ; 41) ramène les marchandises de détail prélevées (10) pièce par pièce au trajet de transport (20), la réinsertion ayant lieu à un point de réinsertion qui se trouve en aval du point de prélèvement dans le sens du transport.

2. Procédé selon la revendication 1,
**caractérisé en ce que**
un premier système de saisie optique (50), dans la zone du point de prélèvement, saisit les marchandises de détail (10) pendant leur transport en continu sur le trajet de transport (20) et envoie les données saisies vers une unité de traitement de données (60) qui évalue les données et pilote le robot (30 ; 31) de manière telle qu'il prélève des marchandises de détail (10) individuelles hors du trajet de transport (20).

3. Procédé selon l'une des revendications 1 à 2,
**caractérisé en ce que**
un deuxième système de saisie optique (70), dans la zone du point de réinsertion, saisit les marchandises de détail (10) pendant leur transport en continu sur le trajet de transport (20) et envoie les données saisies vers une unité de traitement de données (60) qui évalue les données et pilote les moyens de réinsertion des marchandises de détail (10) pièce par pièce dans le trajet de transport (20) de manière telle que les marchandises de détail (10) sont déposées, au point de réinsertion, dans des zones libres du trajet de transport (20).

4. Procédé selon l'une des revendications 1 à 3,
**caractérisé en ce que**
la saisie des données par le système de saisie optique (50 ; 70) est effectuée au moyen d'un scanner laser 3D et/ou de barrières photoélectriques.

5. Procédé selon l'une des revendications 1 à 4,
**caractérisé en ce que**
la réinsertion des marchandises de détail (10) pièce par pièce dans le trajet de transport (20) à partir d'un trajet de transport secondaire (40 ; 41) est effectuée par des éléments coulissants mobiles (80, 81).

6. Procédé selon l'une des revendications 1 à 5,
**caractérisé en ce que**
deux robots (30 ; 31) transfèrent des marchandises de détail (10) sur deux trajets de transport secondaires (40 ; 41).

7. Procédé selon l'une des revendications 1 à 6,
**caractérisé en ce que**
la vitesse du trajet de transport (20) varie pendant le procédé.

8. Dispositif pour séparer des marchandises de détail (10), comprenant un trajet de transport (20) pour le transport des marchandises de détail (10) en continu et au moins un trajet de transport secondaire (40 ; 41) qui assure un transport dans la même direction que le trajet de transport (20),
**caractérisé en ce que**
le dispositif comporte au moins un robot (30 ; 31) avec des moyens pour prendre des marchandises de détail individuelles (10) hors du flux de marchandises de détail sur le trajet de transport (20), pour soulever les marchandises de détail individuelles et pour déposer les marchandises de détail prélevées (10) sur l'au moins un trajet de transport secondaire (40 ; 41) et **en ce que** le trajet de transport secondaire (40 ; 41) comporte des moyens pour ramener les marchandises de détail prélevées (10) pièce par pièce au trajet de transport (20), le point de réinsertion se trouvant en aval du point de prélèvement dans le sens du transport.

9. Dispositif selon la revendication 8,
**caractérisé en ce que**
le dispositif comprend, dans la zone du point de prélèvement, un premier système de saisie optique (50) pour saisir les marchandises de détail (10) pendant leur transport en continu sur le trajet de transport (20), le premier système de saisie optique (50) étant relié à une unité de traitement de données (60) qui comprend des moyens d'évaluation des données saisies et des moyens de pilotage du robot (30 ; 31) pour prélever des marchandises de détail individuelles (10) hors du trajet de transport (20).

10. Dispositif selon l'une des revendications 8 et 9,
**caractérisé en ce que**
le dispositif comprend, dans la zone du point de réinsertion, un deuxième système de saisie optique (70) pour saisir les marchandises de détail (10) pendant leur transport en continu sur le trajet de transport (20), le deuxième système de saisie optique étant relié à une unité de traitement de données (60) qui comprend des moyens d'évaluation des données saisies et des moyens de pilotage des moyens de réinsertion des marchandises de détail (10) pièce par pièce dans le trajet de transport (20) pour déposer, au point de réinsertion, des marchandises de détail (10) pièce par pièce dans des zones libres sur le trajet de transport (20).

11. Dispositif selon l'une des revendications 9 et 10,
**caractérisé en ce que**
le système de saisie optique (50 ; 70) comporte un scanner laser 3D et/ou des barrières photoélectriques.

12. Dispositif selon l'une des revendications 8 à 11,
**caractérisé en ce que**
les moyens de réinsertion des marchandises de détail (10) pièce par pièce dans le trajet de transport (20) à partir d'un trajet de transport secondaire (40 ; 41) comportent des éléments coulissants mobiles (80, 81).

13. Dispositif selon l'une des revendications 8 à 12,
**caractérisé en ce que**
le dispositif comprend deux robots (30 ; 31) et deux trajets de transport secondaires (40 ; 41).

14. Dispositif selon la revendication 13,
**caractérisé en ce que** les deux trajets de transport secondaires (40 ; 41) sont situés chacun d'un côté du trajet de transport (20) et sont parallèles au trajet de transport (20).

15. Dispositif selon l'une des revendications 8 à 14,
**caractérisé en ce que**
le robot (30 ; 31) est un robot à bras articulé.
